Europäisches Patentamt

European Patent Office

Office européen des brevets

(19)

(11) Publication number: **0 200 706 B1**

# EUROPEAN PATENT SPECIFICATION

(12)

(45) Date of publication of patent specification: **18.09.91**  (51) Int. Cl.⁵: **G11B 17/00, G11B 27/10**

(21) Application number: **86870057.6**

(22) Date of filing: **25.04.86**

(54) Control system for record changer apparatus.

(30) Priority: **30.04.85 BE 214939**

(43) Date of publication of application:
**05.11.86 Bulletin 86/45**

(45) Publication of the grant of the patent:
**18.09.91 Bulletin 91/38**

(84) Designated Contracting States:
**CH DE FR GB IT LI NL**

(56) References cited:
**EP-A- 0 029 946**
**BE-A- 897 174**
**GB-A- 1 139 992**

(73) Proprietor: **STAAR SOCIETE ANONYME**
**Chaussée de Roodebeek, 137-143**
**B-1200 Bruxelles(BE)**

(72) Inventor: **d'Alayer de Costemore d'Arc, S.M.A.**
**Rue Emile François, 12A**
**B-1474 Ways(BE)**

(74) Representative: **Overath, Philippe et al**
**Cabinet Bede 13, Avenue Antoine Depage**
**B-1050 Bruxelles(BE)**

**Description**

This invention relates to systems for reading information stored on information carriers such as record discs and magnetic tapes. More particularly, this invention relates to control systems for record changer apparatus permitting, by automatic and remote control, the changing of one record disc for another having a different kind of information.

Navigation systems are known using information carriers for storing cartographic data, such as road maps and navigation maps, as an aid in navigating vehicles, such as automobiles, on a trip. While magnetic tapes or discs may be used for storing such data, the invention has particular utility in connection with record discs storing information and capable of being read by laser for producing audio or video representations of the cartographic data stored on such navigation discs. For purposes of the following explanation of the background and the invention, reference will be made to record discs but it should be understood that this term is meant to cover discs or magnetic tapes stored in cassette or the like.

Such navigation systems conventionally employ satellites, transmitter networks, or the like to fix the exact position of the receiver and combine that information with the cartography of a region from a record disc to enable a user of the system to navigate a vehicle by showing the user the direction and road to take to a desired destination.

The same type of record discs used for storing cartographic information to be reproduced in audio or video form are used for storing music and action entertainment for reproduction in audio or video form. It is now proposed that it would be desirable to provide a system having a magazine for receiving a plurality of record discs of both navigation and entertainment types, for example, reserving one compartment in the magazine for a navigation record disc and the other compartments of the magazine for entertainment record discs. Furthermore, it is proposed to employ a record changer for switching the playing between the record discs. Such a changer may be located in the trunk of a vehicle and operated by remote control by the driver.

In conventional record changer apparatus, a control system provides for successive or selective playing of the record discs according to a program selected by the user. When the operation of a program sequence is interrupted and the playing is subsequently resumed, it would be conventional for the apparatus to resume the playing of the record disc at the place of interruption, a system for storing the positional location of interruption being disclosed in Belgian patent No 897.174, provided that the same sequence is followed as specified by the program.

If the sequence of the program is altered, the device disclosed in the aforesaid Belgian patent does not retain the positional information, which is erased, and a changer equipped with such a device simply provides for the playing of the selected disc.

This normal operational mode becomes a major handicap for a changer which provides for the selection of one or several record discs stored in a magazine containing information to be used by a system independent of the changer as, for example, a navigation system.

The principal object of this invention is to provide a control system for a record changer which permits changing a record disc having one kind of information, such as a music or video program, for another record disc having a different kind of information, such as navigation information, where the record changer apparatus is installed in a vehicle. In a successive reading operation when a navigation record disc is changed for a music or video program record disc and subsequently the record disc is again changed and the operation of the navigation record disc is resumed, it is an object of this invention to provide for resuming the reading operation on the navigation record disc at the same positional location where it was being read the preceding time it was being played.

A more specific object is to provide a control system for a record changer apparatus particularly suited for reading information on a navigation record disc intermixed with a number of entertainment record discs in a record storage magazine and capable of returning the reading head to the same positional location on the navigation record disc where the playing operation ended during a previous reading, thus calling up information as to the same locality on the map stored on the navigation disc where the preceding inquiry was concentrated.

Accordingly, a preferred embodiment of the present invention will be explained in connection with the accompagnying drawings, in which :

Figure 1 is a schematic diagram of the control system for a record changer apparatus.

Figure 2 is a front view of a magazine having separate compartments for storing record discs having different kinds of information recorded thereon, and

Figure 3 is a schematic view of a selection panel of a signal generating means included in the control system.

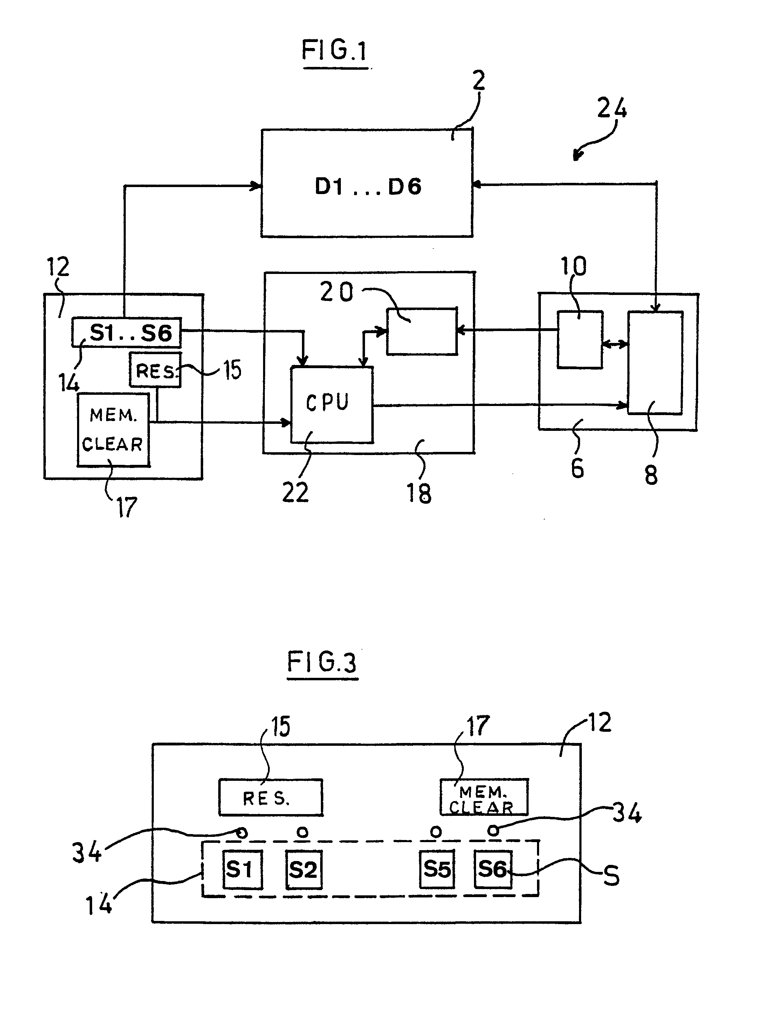

Referring to Figure 1, which is a schematic diagram of a preferred embodiment of the present invention, there is shown a magazine means 2 for receiving a plurality of information carriers, herein shown as record discs D. This magazine means 2 stores record discs D which are transferred by a record changer (not shown) to a reproduction device 6 having a reproduction unit 8 for playing or reading information stored on the record discs D transferred from the magazine means 2. The reproduction device 6 further includes a locating means 10 associated with the reproduction unit 8 for determining a precise operating location of the reproduction unit 8 relative to a selected record disc in operative position, which may be of the type described in Belgian patent No 897.174.

A signal generating means 12 includes a selector panel 14 having selector elements S1-S6 operable manually by a record disc user. A control means 18 is electrically connected to both the reproduction unit 8 and the signal generating means 12 to control the switching and reading operations of the record discs D1-D6 in the reproduction unit 8. The control means 18 includes a memory means, herein shown as a ROM memory unit 20, for storing the positional location of the reproduction unit 8, as transmitted from the locating means 10, and a program-controlled CPU 22 for processing the information received from the memory unit 20 and the signal generating means 12 so as to control the operation of the reproduction unit 8 in a desired fashion. All of the above-mentioned elements constitute a control system 24.

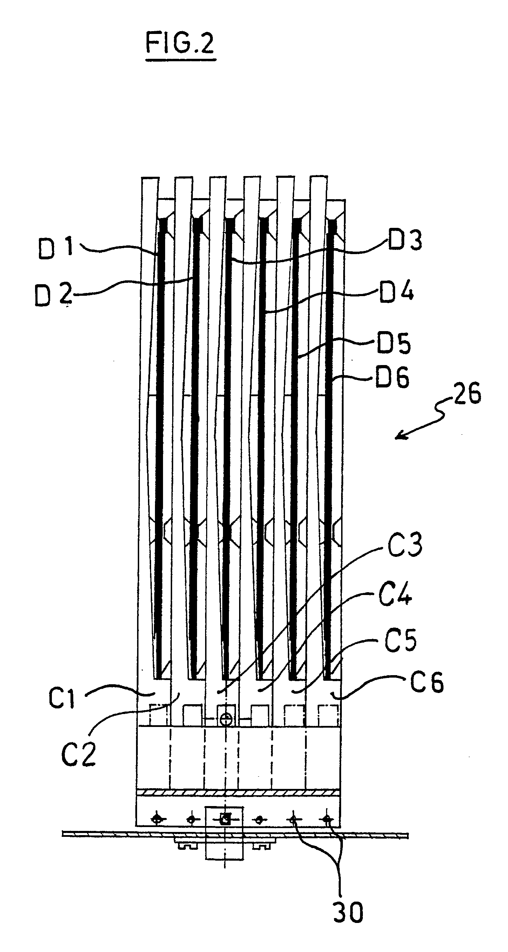

In keeping with an aspect of the present invention, the magazine means 2 is illustrated in detail in Figure 2. As can be seen, the magazine means 2 includes a magazine 26 having multiple compartments C1-C6 each receiving a record disc D and having a mark 30 identifying the location of the compartment in the magazine 26. Each locating mark 30 corresponds to a selector element S provided on the selector panel 14 of the signal generating means 12. In this particular embodiment six storage compartments C1-C6 are illustrated in the magazine 26 for receiving two discs containing navigation information at locations D1 and D2 and four entertainment discs at locations D3-D6, The magazine means 2 is included as part of a changer apparatus of the type, for example, disclosed in Belgian patent No 898.775.

Figure 3 illustrates in further detail the signal generating means 12 which includes a series of push-button switches S1-S6 corresponding to the selector elements S and capable of generating command signals at the direction of the user. Also provided is a status means including a luminous LED indicator 34 for each selector element S to indicate interruption in operation of a corresponding record disc D The signal generating means 12 further includes a RESUME switch key 15 and a MEM CLEAR switch key 17, the operation of which will become clear when the operation of the control system is explained.

The operation of the control apparatus according to the invention can now be explained with reference to Figure 3. For simplicity, the discs D1-D6 in storage compartments C1-C6 having identifying marks are referred by the corresponding selector elements S1-S6. It is further assumed that the magazine 26 is fixed and that the recording disc D5 in storage compartment C5 has been transferred to the reproduction unit 8. This represents a condition resulting from selector S5 having been activated and the record changer apparatus operated to transfer the recording disc D5 from the storage compartment S5 to the reproduction unit 8. The reproduction unit 8 is allowed to move across the surface of the disc D5 as the disc D5 is rotated. When the user desires to obtain information from a navigation disc, the user then pushes another selector element S, such as selector element S1, on the selector panel 14. This selection represents the interruption in operation of record disc D5 and corresponds to the activation of operation of record disc D1. Correspondingly, the LED indicator 34 above the selector element S5 is lit to indicate that operation of record disc D5 is interrupted. The operating location of the reproduction unit 8 relative to the record disc D5 is determined by the locating means 10 and recorded in the memory unit 20. At the same time, a first request signal is generated by the signal generating means 12 and sent to the CPU 22. Upon receipt of this request signal, the control means 18 generates a first control signal to the reproduction unit 8 which, in turn, returns disc D5 to its storage compartment C5 and transfers disc D1 into its operating position. The navigation information contained on disc D1 is read and sent to a navigation system (not shown) for processing. Disc D1 may include directions, maps, or the like, aiding the user to reach a desired destination. Upon completion, that is, when the user wishes to resume the operation of the entertainment disc D5, a second request signal is generated from the signal generating means 12 by pushing the RESUME switch key 15. The CPU 22, upon receiving this second request signal, obtains the operating location of the reproduction unit 8 at the point of interruption from the memory unit 20 and generates a second control signal to resume the operation of record disc D5. Record disc D1 is then returned to its storage compartment C1, record disc D5 is transferred to its operating position, and the reproduction unit is moved to the operating location where disc D5 was interrupted to resume the reproducing operation. As a result, disc D5 is continuously played even though interruption occurs. This eliminates the need for searching every time a disc is returned to its operating position and allows continuous monitoring of the information on a navigation map, for example, during the course of a trip even though the reading of navigation operation is interrupted for the playing of entertainment discs. On the other hand, when it is desired to resume the reading operation of disc D5 from the beginning rather than at the point of previous interruption, the user simply needs to activate the MEM CLEAR key 17 on the selector panel 14 after pushing the RESUME key 15. By activating both control keys, two signals, one representing the clearing of memory and the other being the second control signal representing the resumption operation, are generated and sent to the CPU22.

As shown, the discs may be repeatedly switched from one containing navigation information to an entertainment disc, or vice versa, and the reproducing operation may be interrupted and resumed as desired. Furthermore, the resumption of operation after an interruption is selected to start at the point of interruption.

In addition, since the control means includes a program-controlled CPU, different sequences of operation may be employed.

**Claims**

1. Control apparatus for switching the reading operation between a plurality of information carriers in an information-reproducing system comprising :
   - a plurality of information carriers (D1-D6) ;
   - a magazine (2,26) for receiving said information carriers (D1-D6) ;
   - a reproduction unit (8) for reading information on an information carrier (D1-D6) from said magazine (2-26) ;
   - signal generating means (12) for generating request signals to activate and interrupt a reading operation ;
   - control means (20) connected to receive and responsive to said request signals from said signal generating means (12) to activate the reproduction unit (8) to read information on said information carriers (D1-D6) ;
   - locating means (10) associated with said reproduction unit (8) for determining a precise positional location where information is being read on an information carrier ;
   - memory means (20) electrically connected to said locating means (10) for storing the positional location where information is being read on an information carrier characterized in that
   - said plurality of information carriers (D1-D6) are of two different types, a first type of carrier (D1-D2) carrying navigation information being reproducible by a navigation system and a second type of carrier (D3-D6) carrying information being reproducible in audio or video form ;
   - said signal generating means (12) include means to generate a first request signal in response to operation from an external source representing the activation of a reading operation on a carrier of the first type (D1-D2) and the interruption of the reading operation on a carrier of the second type (D3-D6), and a second request signal in response to operation from the external source representing the termination of the reading operation on a carrier of the first type (D1-D2) and the resumption of the reading operation on a carrier of the second type (D3-D6) ;
   - said control means (18) include means operable from the external source to interrupt the reading operation on an information carrier (D3-D6) of the second type, to switch the reading operation to an information carrier (D1-D2) of the first type to interrupt the reading operation on the information carrier of the first type (D1-D2) and to resume the reading operation on the information carrier of the second type (D3-D6) ;
   - said memory means (20) include means for storing the positional location where information is being read on the information carrier of the second type (D3-D6) when the reading operation is interrupted and switched to the information carrier of the first type (D1-D2) in response to operation from the external source.

2. A control apparatus according to claim 1 characterized in that said signal generating means (12) further include means (15) for generating a third control signal for activating the reproduction unit (8) to resume reading information on the information carrier (D3-D6) of the second type at a predetermined positional location.

3. A control apparatus according to claim 1 characterized in that said signal generating means (12) further include means (17) for clearing the memory means (20) and for resuming the reading operation on the information carrier (D3-D6) of the second type from the beginning rather than at the point of previous interruption.

4. A control apparatus according to claim 1 characterized in that said memory means (20) further including means for storing the positional location where information is being read on the information carrier of the first type (D1-D2) when the reading operation thereon is terminated.

5. A control apparatus according to claim 1 characterized in that said second request signal produced by said signal generating means (12) is used to activate the reproduction unit (8) to read information from a first type of carriers (D1-D2) from said magazine means (2,26) carrying information which is different than the information carried by the second type of carriers (D3-D6).

6. A control apparatus according to claim 1 characterized in that said memory means (20) includes a non-volatile ROM-type memory unit.

7. A control apparatus according to claim 1 characterized in that said plurality of information carriers are discs.

**Revendications**

1. Appareil de commande pour la commutation de l'opération de lecture entre plusieurs supports d'information dans un système de reproduction de l'information comprenant:
   - plusieurs supports d'information (D1-D6);
   - un magasin (2, 26) pour recevoir lesdits supports d'information (D1-D6);
   - une unité de reproduction (8) pour lire l'information sur un support d'information (D1-D6) dudit magasin (2, 26);
   - un dispositif générateur de signaux (12) pour la génération de signaux de demande afin d'activer et d'interrompre une opération de lecture;
   - un dispositif de commande (20) connecté pour la réception et la réponse desdits signaux de demande dudit dispositif générateur de signaux (12) pour activer l'unité de reproduction (8) afin de lire l'information sur lesdits supports d'information (D1-D6);
   - un dispositif de positionnement (10) associé à ladite unité de reproduction (8) pour déterminer l'endroit précis où l'information est lue sur un support d'information;
   - un dispositif de mémoire (20) raccordé électriquement audit dispositif de positionnement (10) pour mémoriser l'endroit où l'information est lue sur un support d'information caractérisé en ce que

   - lesdits plusieurs supports d'information (D1-D6) sont de deux types différents, un premier type de support (D1-D2) portant des informations de navigation pouvant être reproduites par un système de navigation et un second type de support (D3-D6) portant des informations pouvant être reproduites sous forme audio ou vidéo;
   - ledit dispositif générateur de signaux (12) comprend des dispositifs pour générer un premier signal de demande en réponse au fonctionnement d'une source externe représentant l'activation d'une opération de lecture sur un support du premier type (D1-D2) et l'interruption de l'opération de lecture sur un support du second type (D3-D6), et un second signal de demande en réponse au fonctionnement de la source externe représentant la fin de l'opération de lecture sur un support du premier type (D1-D2) et la reprise de l'opération de lecture sur un support du second type (D3-D6);
   - ledit dispositif de commande (18) comprend un dispositif actionnable à partir de la source externe pour interrompre l'opération de lecture sur un support d'information (D3-D6) du second type, pour commuter l'opération de lecture vers un support d'information (D1-D2) du premier type, pour interrompre l'opération de lecture sur le support d'information du premier type (D1-D2) et reprendre l'opération de lecture sur le support d'information du second type (D3-D6);
   - ledit dispositif de mémoire (20) comprend des moyens de mémorisation de l'endroit où l'information est lue sur le support d'information du second type (D3-D6) lorsque l'opération de lecture est interrompue et commutée vers le support d'information du premier type (D1-D2) en réponse à l'actionnement de la source externe.

2. Un dispositif de commande selon la revendication 1 caractérisé en ce que ledit dispositif générateur de signaux (12) comprend par ailleurs un dispositif (15) pour générer un troisième signal de commande pour activer l'unité de reproduction (8) afin de reprendre la lecture des informations sur le support d'information (D3-D6) du second type à un endroit prédéterminé.

3. Un dispositif de commande selon la revendication 1 caractérisé en ce que ledit dispositif générateur de signaux (12) comprend par ailleurs un dispositif (17) pour effacer le contenu de la mémoire (20) et reprendre l'opération de lecture sur le support d'information (D3-D6) du second type à partir du début plutôt qu'à l'endroit de l'interruption précédente.

4. Un dispositif de commande selon la revendication 1 caractérisé en ce que le dispositif de mémoire (20) comprend par ailleurs un dispositif de mémorisation de l'endroit où l'information est lue sur le support d'information du premier type (D1-D2) une fois que l'opération de lecture de celui-ci est terminée.

5. Un dispositif de commande selon la revendication 1 caractérisé en ce que ledit second signal de demande produit par ledit dispositif générateur de signaux (12) est utilisé pour activer l'unité de reproduction (8) pour lire l'information d'un premier type de supports (D1-D2) dudit magasin (2, 26) portant des informations différentes de celles portées par le second type de supports (D3-D6).

6. Un dispositif de commande selon la revendication 1 caractérisé en ce que ladite mémoire (20) comprend une mémoire ROM rémanente.

7. Un dispositif de commande selon la revendication 1 caractérisé en ce que l'ensemble des supports d'information sont des disques.

**Patentansprüche**

1. Steuervorrichtung zum Umschalten des Lesevorganges zwischen einer Vielzahl von Informationsträgern in einem Informationswiedergabesystem, mit
   - einer Vielzahl von Informationsträgern (D1-D6);
   - einem Magazin (2, 26) zum Aufnehmen der Informationsträger (D1-D6);
   - einer Wiedergabeeinheit (8) zum Lesen von Information auf einem Informationsträger (D1-D6) von dem Magazin (2-26);
   - Signalerzeugungseinrichtungen (12) zum Erzeugen von Anfragesignalen zum Aktivieren und Unterbrechen eines Lesevorganges;
   - Steuereinrichtungen (20), welche angeschlossen sind, von den Signalerzeugungseinrichtungen (12) die Anfragesignale zu empfangen und auf diese anzusprechen, um die Wiedergabeeinheit (8) zu aktivieren, Information auf den Informationsträgern (D1-D6) zu lesen;
   - Lagebestimmungseinrichtungen (10), die der Wiedergabeeinheit (8) zugeordnet sind, um eine genaue Positionslage zu bestimmen, wo Information auf einem Informationsträger gelesen wird;
   - Speichereinrichtungen (20), welche elektrisch mit den Lagebestimmungseinrichtungen (10) verbunden sind, um die Positionslage, wo Information auf einem Informationsträger gelesen wird, zu speichern,
   dadurch **gekennzeichnet**, daß
   - die Vielzahl von Informationsträgern (D1-D6) von zwei verschiedenen Typen sind, wobei ein erster Trägertyp (D1-D2) Navigationsinformation trägt, die von einem Navigationssystem reproduzierbar ist, und ein zweiter Trägertyp (D3-D6) Information trägt, die in hörbarer oder sichtbarer Form reproduzierbar ist;
   - die zweiten Signalerzeugungseinrichtungen (12) Einrichtungen einschließen zum Erzeugen
   eines ersten Anfragesignals auf einen Vorgang von einer externen Quelle hin, welcher die Aktivierung eines Lesevorganges auf einem Träger des ersten Typs (D1-D2) und die Unterbrechung des Lesevorganges auf einem Träger des zweiten Typs (D3-D6) darstellt, und eines zweiten Anfragesignals auf einen Vorgang von der externen Quelle hin, der die Beendigung des Lesevorganges auf einem Träger des ersten Typs (D1-D2) und die Wiederaufnahme des Lesevorganges auf einem Träger des zweiten Typs (D3-D6) darstellt;
   - die Steuereinrichtungen (18) Einrichtungen einschließen, die von der externen Quelle bedienbar sind, um den Lesevorgang auf einem Informationsträger (D3-D6) des zweiten Typs zu unterbrechen, um den Lesevorgang zu einem Informationsträger (D1-D2) des ersten Typs umzuschalten, um den Lesevorgang auf dem Informationsträger des ersten Typs (D1-D2) zu unterbrechen, und den Lesevorgang auf dem Informationsträger des zweiten Typs (D3-D6) wieder aufzunehmen; und
   - die Speichereinrichtungen (20) Einrichtungen einschließen zum Speichern der Positionslage, wo Information auf dem Informationsträger des zweiten Typs (D3-D6) gelesen wird, wenn der Lesevorgang unterbrochen und auf den Informationsträger des ersten Typs (D1-D2) auf einen Vorgang von der externen Quelle hin umgeschaltet wird.

2. Steuervorrichtung nach Anspruch 1, dadurch **gekennzeichnet**, daß die Signalerzeugungseinrichtungen (12) ferner Einrichtungen (15) zum Erzeugen eines dritten Steuersignals einschließen, um die Wiedergabeeinheit (8) zu aktivieren, das Lesen von Information auf dem Informationsträger (D3-D6) des zweiten Typs an einer vorbestimmten Positionslage wieder aufzunehmen.

3. Steuervorrichtung nach Anspruch 1, dadurch **gekennzeichnet**, daß die Signalerzeugungseinrichtung (12) ferner Einrichtungen (17) zum Löschen der Speichereinrichtungen (20) und zum Wiederaufnehmen des Lesevorganges auf dem Informationsträger (D3-D6) des zweiten Typs am Anfang anstatt am Punkt einer vorherigen Unterbrechung einschließen.

4. Steuervorrichtung nach Anspruch 1, dadurch **gekennzeichnet**, daß die Speichereinrichtungen (20) ferner Einrichtungen zum Speichern der Positionslage einschließen, wo Information auf dem Informationsträger des ersten Typs (D1-D2) gelesen wird, wenn der Lesevorgang darauf beendet wird.

5. Steuervorrichtung nach Anspruch 1, dadurch **gekennzeichnet**, daß das zweite von den Signalerzeugungseinrichtungen (12) erzeugte Anfragesignal verwendet wird, die Wiedergabeeinheit (8) zu aktivieren, Information von einem ersten Typ von Trägern (D1-D2) von der Magazineinrichtung (2, 26) zu lesen, welche Information tragen, die verschieden ist von der Information, die von Trägern des zweiten Typs (D3-D6) getragen wird.

6. Steuervorrichtung nach Anspruch 1, dadurch **gekennzeichnet**, daß die Speichereinrichtungen (20) eine nicht flüchtige Speichereinheit vom ROM-Typ einschließen.

7. Steuervorrichtung nach Anspruch 1, dadurch **gekennzeichnet**, daß die Vielzahl von Informationsträgern Platten sind.

## FIG.1

## FIG.3

# FIG.2